# EUROPÄISCHE PATENTSCHRIFT

(11) **EP 1 890 838 B1**
(45) Veröffentlichungstag und Bekanntmachung des Hinweises auf die Patenterteilung: **24.08.2011**
(21) Anmeldenummer: 06743143.7
(22) Anmeldetag: 09.06.2006
(51) Int. Cl.: B23P 15/00, F01N 3/022, B01D 39/20, B01D 46/24

(54) **WABENKÖRPER-HERSTELLUNG MIT EINEM METALLISCHEN VLIES**
PRODUCING A HONEYCOMB BODY WITH A METALLIC FLEECE
PRODUCTION D'UN CORPS EN NID D'ABEILLES COMPRENANT UN NON-TISSE METALLIQUE

(30) Priorität: 17.06.2005 DE 102005028031
(43) Veröffentlichungstag der Anmeldung: 27.02.2008
(60) Teilanmeldung: 10015715.5
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2006/005534
(87) Internationale Veröffentlichungsnummer: WO 2006/133854

(56) Entgegenhaltungen:
- EP-A- 0 764 455
- EP-A- 0 798 452
- US-A1- 2004 194 440
- PATENT ABSTRACTS OF JAPAN Bd. 2000, Nr. 25, 12. April 2001 (2001-04-12) -& JP 2001 224967 A (TAKEKAWA ENGINEERING KK; KOGI CORP), 21. August 2001 (2001-08-21)

## Beschreibung

Die vorliegende Erfindung betrifft ein Verfahren zur Herstellung eines Wabenkörpers mit mindestens einem Vlies aufweisend metallische Fasern.

Derartige Wabenkörper können in Abgassystemen von Verbrennungskraftmaschinen unterschiedliche Funktionen haben. So werden sie beispielsweise als Katalysator-Trägerkörper, als so genannte Adsorber, als Filter, Strömungsmischer und/oder Schalldämpfer eingesetzt. Der Wabenkörper zeichnet sich üblicherweise durch ein günstiges Verhältnis von Oberfläche zu Volumen aus, er hat also eine relative große Oberfläche und gewährleistet somit einen intensiven Kontakt mit einem an ihm bzw. einen durch ihn hindurchströmenden Gasstrom. Solche Wabenkörper werden üblicher Weise mit einer Mehrzahl unterschiedlicher Komponenten (Bleche, Matten, Rohre, etc.) aus zum Teil verschiedenen Materialien (Stahlwerkstoffe, keramische Substanzen, Mischmaterialien, etc.) aufgebaut. In Anbetracht der hohen thermischen und dynamischen Belastungen in Abgassystemen mobiler Verbrennungskraftmaschinen müssen diese einzelnen Komponenten dauerhaft miteinander verbunden werden. Hierzu sind unterschiedliche Verbindungstechniken bekannt, beispielsweise das Hartlöten und/oder das Schweißen.

Im Hinblick auf die Verbindungstechniken ist zu berücksichtigen, dass sie für eine mittlere Serienfertigung geeignet sein müssen. Dabei spielen Kostengesichtspunkte ebenso eine wichtige Rolle, wie Taktzeiten, Verbindungsqualität, Prozesssicherheit, etc.. Bekannte Verfahren zur Ausbildung fügetechnischer Verbindungen erfordern einen Zusatzwerkstoff, wie beispielsweise Lotmittel oder Schweißzusatzwerkstoff. Dabei ist es besonders wichtig, den Zusatzwerkstoff genau an die Stelle zu applizieren, an der später eine Verbindung generiert werden soll. Außerdem ist darauf hinzuweisen, dass zunehmend dünnwandigere Materialien eingesetzt werden sollen, da sich diese sehr schnelle Temperatur des Abgases anpassen und demnach ein recht dynamisches Reaktionsverhalten aufweisen.

Gerade bei der Herstellung von Wabenkörpern zur Filterung eines Abgasstromes bzw. zum zumindest temporären Aufhalten von im Abgas enthaltenen Feststoffen, wie Partikeln, Asche, Ruß und dergleichen, wurden bereits keramische und metallische Filtermaterialien erprobt. Wie vorstehend erläutert, sollte in Anbetracht der thermischen Wechselbeanspruchung eines solchen Wabenkörpers auf ein zueinander nicht stark abweichendes thermisches Ausdehnungsverhalten der Komponenten des Wabenkörpers geachtet werden. Diese Tatsache sowie die bessere Verarbeitbarkeit führten in jüngster Zeit zu einem verstärkten Einsatz von metallischen Filtermaterialien. Diese werden mit einer gasdurchlässigen, insbesondere porösen, Faserlage gebildet, wobei hier Faser als Oberbegriff für insbesondere auch Drähte, Späne und dergleichen anzusehen ist. Die Herstellung solcher Filtermedien aus Metall sowie deren Integration in die Herstellungsprozesse von einem Wabenkörper stellt demnach eine besondere fertigungstechnische Herausforderung dar. Die metallischen Filtermaterialien müssen an die jeweiligen Einsatzzwecke des damit gebildeten Wabenkörpers angepasst sein, wobei ein hohes Maß an Flexibilität hinsichtlich der Fertigungsschritte erforderlich ist.

Die US 2004/0194440 A1 bildet dem nächstliegendem Stand des Technik und beschreibt eine hitzebeständige Filterlage zur Verwendung in einer Partikelfalle aus einem Fasermaterial, welches einen relativ lockeren Materialverbund aus Fasern darstellt. Dieser Materialverbund kann beispielsweise ein Fasergewebe oder ein Fasergestrick aus keramischen Fasern sein, aber auch Metallfasern, Sintermaterialien, Drahtgewebe können verwendet werden. Der Randbereich besteht aus dem gleichen Material wie der eine Filterabschnitt, wobei dieser bevorzugt einen komprimierten oder verdichteten Faserverbund umfasst. Zudem wird auch die Bereitstellung einer das Fasermaterial umschließende metallische Hülle vorgeschlagen.

Die EP 0 798 452 A1 zeigt einen wechselseitig geschlossenen Partikelfilter, der aus spiralförmig aufgewickelten Metallfolien und Filterlagen gebildet ist.

Die EP 0 764 455 A2 zeigt einen Partikelfilter, der aus gesinterten Gewebelagen bestehend aus Stahlfilamenten gebildet ist. Die Filamente werden von einem spiralförmig gewickelten metallischen Körper durch einen Drehprozess abgetrennt.

Die WO 2006/122719 A1 offenbart ein Verfahren zur Herstellung eines Vlieses zur Verwendung in einer Partikelfalle aus Drahtfilamenten. Das Verfahren umfasst dabei die Schritte: Bilden einer Lage mit Drahtfilamenten, Erzeugen von ersten stoffschlüssigen Verbindungen zwischen zumindest einem Teil der metallischen Drahtfilamente mit einem ersten Fügeverfahren (Schweißen), und Erzeugen von zweiten stoffschlüssigen Verbindungen zwischen metallischen Drahtfilamenten mit einem zweiten Fügeverfahren (Sintern). Das Ausbilden der zweiten stoffschlüssigen Verbindungen kann auch durch einen Lötprozess erfolgen, wenn das vorbehandelte Vlies zusammen mit Metallfolien zu einem Wabenkörper angeordnet und verlötet wird. Unberücksichtigt bleiben dabei Maßnahmen zur angepassten Herstellung der Drahtfilamente für einen kontinuierlichen Prozess.

Aufgabe der vorliegenden Erfindung ist es, die mit Bezug auf den derzeitigen Stand der Technik geschilderten technischen Probleme zumindest teilweise zu lindern. Insbesondere ist ein Verfahren zur Herstellung eines Wabenkörpers anzugeben, dass auch im Rahmen einer Serienfertigung prozesssicher durchgeführt werden kann. Zudem soll die Recyclingfähigkeit derartiger Wabenkörper durch Einsatz metallischer Fasern und deren Wiederverwertung verbessert werden. Die mit dem Verfahren hergestellten Wabenkörper sollen innerhalb einer Serienfertigung nur geringe Abweichungen hinsichtlich der Funktionalität und Lebensdauer aufweisen. Besonders gestaltete Wabenkörper sowie bevorzugte Einsatzgebiete derartiger Wabenkörper sollen ebenfalls angegeben werden.

Diese Aufgaben werden gelöst mit einem Verfahren zur Herstellung eines Wabenkörpers mit mindestens einem Vlies aufweisend metallische Fasern gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können, und weitere Ausgestaltungen des erfindungsgemäßen Verfahrens zu beschreiben.

Das erfindungsgemäße Verfahren zur Herstellung eines Wabenkörpers mit mindestens einem Vlies aufweisend metallische Fasern umfasst zumindest folgende Schritte:
a) Herstellen von metallischen Fasern;
b) Bilden einer Lage mit metallischen Fasern;
c) Verschweißen der metallischen Fasern miteinander;
d) Umformen der Lage zu einem Vlies mit bestimmten Vlieseigenschaften;
e) Erzeugen eines Wabenkörpers;
f) Hartlöten des Wabenkörpers.

Die einzelnen Schritte beziehungsweise deren Ausgestaltungen im Detail werden nachfolgend auch mit Bezug auf die besonders bevorzugten Ausgestaltungen näher erläutert.

Die "Faser" stellt insbesondere eine Bezeichnung für ein lang gestrecktes Element dar und umfasst insbesondere auch drahtförmige, spanförmige und ähnliche Elemente. Die metallischen Fasern können im Wesentlichen rund, oval oder vieleckig ausgeführt sein. Besonders bevorzugt sind Fasern mit einem flachen Querschnitt. Die metallischen Fasern umfassen insbesondere ein Material, das im Wesentlichen Stahl als Grundwerkstoff umfasst, wobei bevorzugt hohe Anteile von Chrom (z. B. in einem Bereich von 18 bis 21 Gew.- %) und/oder Aluminium (z. B. mindestens 4,5 Gew.- %, insbesondere mindestens 5,5 Gew.- %) vorgesehen sind. Die metallischen Fasern sind bevorzugt mit einer Faserlänge im Bereich von 0,1 bis 50 mm (insbesondere in einem Bereich von 1 bis 10 mm) und einem Faserdurchmesser im Bereich von 0,01 bis 0,1 mm (insbesondere in einem Bereich von 0,02 bis 0,05 mm) ausgeführt.

Grundsätzlich ist in diesem Zusammenhang bereits zu erwähnen, dass im Hinblick auf die Ausgestaltung des Verfahrens im Serienbetrieb die Verfahrensschritte möglichst kontinuierlich ablaufen sollten, wobei die Schritte b), c) und/oder d) bevorzugt mit einer Vorschubgeschwindigkeit von mindestens 3 Meter pro Minute (m/min), bevorzugt mindestens 5 m/min oder sogar 10 m/min, durchgeführt werden sollte.

Im Hinblick auf den Schritt e) sind unter Umständen separate Montagevorgänge erforderlich, die eine diskontinuierliche Bearbeitung erforderlich machen, diese sich jedoch mit entsprechend hohen Taktzeiten durchzuführen. Schritt f) gewährleistet eine unverlierbare Anordnung der einzelnen Komponenten des Wabenkörpers zueinander, so dass der Wabenkörper selbst den hohen thermischen und dynamischen Beanspruchungen im Abgassystem mobiler Verbrennungskraftmaschinen Standhalten kann.

Im Hinblick auf das Herstellen von metallischen Fasern ist es erfindungsgemäß , dass Schritt a) wenigstens eine der folgenden Herstellungsmethoden umfasst:
a.1) Abtrennen von einem Metallblock;
a.2) Kontinuierliche Fasererzeugung aus einer Metallschmelze;
a.3) Diskontinuierliche Entnahme aus einer Metallschmelze.

Das "Abtrennen" von einem Metallblock gemäß der Methode a.1) umfasst insbesondere auch das Fräsen, Bohren, Drehen, Hobeln, Raspeln, Schneiden oder ähnliche, insbesondere Späne erzeugende, Fertigungsverfahren. Der Span stellt dabei die Faser dar. Während beim Fräsen, Hobeln und Raspeln regelmäßig ein gebrochener Span entsteht, können beim Drehen oder Bohren auch sehr lange Späne erzeugt werden. Mit einem Metallblock ist vor allen ein Festkörper gemeint, der aus Metall ist, wobei die explizite Gestalt des Körpers in Anbetracht des zur Spanbeziehungsweise Faserherstellung eingesetzten Fertigungsverfahrens auszuwählen ist. Demnach kann der Metallblock als Zylinder, Quader, Draht oder in ähnlicher Form vorliegen.

Bei der kontinuierlichen Fasererzeugung (vgl. Methode a.2)) wird eine drahtähnliche, sehr lange bzw. so genannte "endlose", Faser aus der Metallschmelze hergestellt. Dabei können die Fasern einzeln gemeinsam im Bündel extrudiert oder gezogen werden. Zur Veranschaulichung dieser Herstellungsmethode kann der Fachmann z.B. auf entsprechende Beschreibungen zur Drahtherstellung zurückgreifen.

Die diskontinuierliche Entnahme der Fasern aus einer Metallschmelze (vgl. Methode a.3)) stellt quasi eine Mischmethode zwischen den Methoden a.1) und a.2) dar. So wird beispielsweise ein Laufrad mit einer strukturierten Umfangsfläche relativ zur Metallschmelze bewegt, wobei durch den zeitweisen Kontakt Teile der Metallschmelze aus dem Bad entfernt werden, die später zu den metallischen Fasern abkühlen. Dabei werden wiederholt und mit hoher Geschwindigkeit diskontinuierlich Fasern erzeugt.

Besonders vorteilhaft ist es, dass während Schritt a) zumindest zeitweise Maßnahmen zur Vermeidung einer Oxidschicht bei den Fasern getroffen werden. Dies trifft insbesondere im Hinblick auf die Herstellungsmethode a.1) zu, dar hier bei der Faserherstellung unter Umständen sehr hohe Temperaturen auftreten. Eine Oxidschicht auf der Oberfläche der Fasern kann nachfolgende Bearbeitungsschritte behindern bzw. deren prozesssichere Auslegung gefährden. Deshalb wird hier z.B. vorgeschlagen, kontinuierlich und/oder intermittierend eine gekühlte beziehungsweise reduziert wirkende Atmosphäre bereit zu stellen. So können beim Abtrennen der Fasern von einem Metallblock beispielsweise Kühlmittel und/oder ein Schutzgas umfassend Argon und/oder Helium zugeführt werden. Beide Maßnahmen wie weitere bekannte Maßnahmen, dienen zur Vermeidung einer Oxidschicht. Ergänzend können die Fasern auch mechanisch nachbearbeitet werden, so dass sich an der Oberfläche der Faser befindliche Oxidschicht mechanisch bzw. abrasiv entfernt wird. Unter "Vermeidung" wird auch eine gegenüber normalen Bedingungen reduzierte Bildung (Reduzierung) von Oxidschichten verstanden.

Weiter wird vorgeschlagen, dass zwischen Schritt a) und Schritt b) zumindest noch der Schritt ab) Faservorbereitung durchgerührt wird, der zumindest eine der folgenden Handlungen umfasst:
ab.1) Klassifizieren der Fasern;
ab.2) Selektieren der Fasern;
ab.3) Rückführen der Fasern zur Wiederverwertung;
ab.4) Schneiden der Fasern;
ab.5) Mischen der Fasern;
ab.6) Reinigen der Fasern.

Die Faservorbereitung stellt einen wichtigen Arbeitsschritt im Hinblick auf die Herstellung von Wabenkörpern mit gezielten, unterschiedlichen Eigenschaften in einer Produktionslinie dar. Hier können die kontinuierlich beziehungsweise diskontinuierlich erzeugten Fasern hinsichtlich ihres Einsatzzweckes untersucht und vorbestimmt werden. Im Rahmen der Faservorbereitung sollen insbesondere Inhomogenitäten der Fasergestalt aufgrund des Herstellungsverfahrens der Fasern kompensiert werden.

Das "Klassifizieren" der Fasern umfasst insbesondere das Erkennen und Zuordnen der Fasern in vorgegebene Klassen, die sich beispielsweise an dem Gewicht, der Läge, der Dicke, der Form oder eines anderen Parameters der Fasern orientieren. Hier wird, gerade im Hinblick auf die Herstellungsmethoden a.1) und a.3), bei denen die Spanform unter Umständen variiert, vorgeschlagen, dass drei unterschiedliche Klassen vorgesehen sind, in welche die hergestellten Fasern klassifiziert werden. Darüber hinaus können noch Ausschlusskriterien definiert werden, wobei die die Ausschlusskriterien erfüllenden Fasern einer weiteren Klasse zu zuordnen sind. Zur Klassifizierung selbst können auch Sensoren zum Einsatz kommen, wobei beispielsweise mittels mindestens einem optischen Sensor die Spanform, - Länge und dergleichen erfasst wird. Darüber hinaus können Gebläse, Fluide, Siebe, etc. ebenfalls zur Erkennung beziehungsweise Klassifizierung der Fasern eingesetzt werden.

Beim Selektieren der Fasern werden die (zuvor bevorzugt klassifizierten) Fasern voneinander getrennt. Auch hierzu können Gebläse, Fluide, Siebe, etc. zum Einsatz gelangen. Für den Fall, dass die Fasern in drei Klassen klassifiziert wurden, können die Fasern aus zwei Klassen beispielsweise der Weiterverarbeitung zugeführt werden, während die Fasern der dritte Klasse wieder der Herstellungsmethode als Rohmaterial (Ausschuss) zugeführt werden. Nach dem Selektieren der Fasern werden die voneinander getrennten Fasern zumindest für einen Folgeschritt des Herstellungsverfahrens separat weiterbehandelt.

Wie bereits zuvor stehend angedeutet, erlaubt das Klassifizieren beziehungsweise Selektieren der Fasern in einfacher Weise auch ein Rückführen der Fasern und zur Wiederverwertung. Dies ist im Hinblick auf die Rohmaterial-Ausnutzung sowie die Umwelt vorteilhaft. Die zurückbeförderten Fasern können beispielsweise erneut eingeschmolzen und als Metallschmelze beziehungsweise Metallblock den angeführten Herstellungsmethoden wieder zugeführt werden. Dabei können Reinigungs- beziehungsweise Wärmebehandlungen zwischengeschaltet sein.

Insbesondere auf die Herstellungsmethode der Fasern gemäß Schritt a.2) können die "endlosen" Fasern nun auf eine vorgegebene Länge geschnitten werden. Das Schneiden der Fasern kann mit einer gleich bleibenden und/oder variierenden Faserlänge vorgenommen werden. Gerade bei der Variation der Faserlänge kann diesem Verfahrensschritt auch ein Klassifizieren beziehungsweise Selektieren nachgeschaltet sein.

Darüber hinaus können die Fasern auch gemischt werden. Damit kann beispielsweise eine bestimmte räumliche Ausrichtung der Fasern zu einander generiert werden, es ist aber auch möglich, die im Herstellungsfluss befindlichen Fasern mit weiteren Fasern (beispielsweise eines anderen Materials und/oder einer anderen Gestalt) beizumengen. Es ist auch möglich, bereits hier eine schichtweise Anordnung der Fasern unterschiedlicher Ausprägung zu Erzeugen, bevorzugt ist jedoch eine letztendliche Wirrlage der Fasern.

Schließlich kann es auch vorteilhaft sein, die hergestellten Fasern zu reinigen. Hierbei können Verunreinigungen (Ruß, Öl, ...) ebenso entfernt werden, wie z.B. auch eine Oxidschicht. Besonders vorteilhaft ist die Reinigung mit einem Fluid, wobei unterschiedlich geformte Fasern infolge eines unterschiedlichen Eintauchverhaltens ggf. direkt auch noch klassifiziert und/oder selektiert werden.

Weiter wird hier vorgeschlagen, dass Schritt b) zumindest eine der folgenden Handlungen umfasst:
b.1) Verteilen von Fasern auf einer Unterlage;
b.2) Zugeben mindestens eines Zusatzstoffes;
b.3) Bestimmen wenigstens einen Lagenparameters;
b.4) Verändern des wenigstens einen Lagenparameters;
b.5) Kontinuierliches Bewegen der Lage.

Zum Verteilen der Fasern auf einer Unterlage kommt bevorzugt ein Verteiler, ein Rüttler und/oder ein Sieb zum Einsatz. Diese Geräte sind geeignet, eine großflächige beziehungsweise gleichmäßige Verteilung der Fasern auf der Unterlage zu bewirken. Gerade bei der Ausgestaltung des Herstellungsverfahrens umfassend die Schritte ab.1) und/oder ab.2) können auch mehrere dieser Geräte vorgesehen sein, die jeweils eine Klasse der Fasern auf die Unterlage zugeben (zeitlich und/oder räumlich zueinander versetzt). Damit können beispielsweise auch Schichten unterschiedlicher Fasern auf der Unterlage gebildet werden. Die Verteilung der Fasern kann demnach neben der schichtweisen Ausprägung auch mit einem Gradienten, also mit einem im Wesentlichen kontinuierlichen Verlauf einer Fasereigenschaft von der Unterseite der Faserlage zur Oberseite der Faserlage, oder als Wirrlage ausgestaltet sein, bei der die Fasern ungeordnet zueinander abgelegt werden.

Betreffend die Zugabe eines Zusatzstoffes können beispielsweise auch weitere, metallische Filtermaterialien zugegeben werden. So umfassen solche Zusatzstoffe beispielsweise metallische Pulver, Sintermaterialien, Gewebe etc.. Der Zusatzstoff dient damit insbesondere auch dem Aufbau des Faservlieses.

Während und/oder nach Schritt b) wird vorteilhafter Weise wenigstens ein Lagenparameter bestimmt. Damit ist eine Überwachung der Lagenbildung gegeben, wobei die Lage beispielsweise hinsichtlich einer vorgegebenen Porosität, eines vorgegebenen Flächengewichts, einem vorgegebenen Licht-Reflektionsgrad, einem vorgegebenen Strömungswiderstand, etc. verglichen wird. Der Lagenparameter kann kontinuierlich überwacht werden und bei Erreichen eines bestimmten Wertes entweder zur Unterbrechung eines zeitgleich ablaufenden Verfahrensschrittes oder aber zur Aktivierung eines weiteren Verfahrensschrittes führen.

Dabei sind gegebenenfalls auch Mittel vorgesehen, die eine Veränderung des bestimmten beziehungsweise zu bestimmenden Lagenparameters ermöglichen. Demnach können beispielsweise weitere Fasern, Zusatzstoffe, etc. zugeführt werden, die Lage kann verdichtet werden, die Ausrichtung der Fasern der Lage kann variiert werden. Im Hinblick auf die bevorzugte Ausgestaltung des Verfahrens zur Herstellung eines Wabenkörpers als kontinuierliches Verfahren wird vorgeschlagen, dass während des Bildens einer Lage ein kontinuierliches Bewegen der Lage stattfindet. Dabei ist die Unterlage, auf die die Fasern verteilt werden, vorteilhafter Weise als Förderband ausgeführt. Durch Variation beispielsweise der Fördergeschwindigkeit können ebenfalls Lagenparameter eingestellt werden. Gleichzeitig kann ein solches Förderband Mittel zur Bestimmung wenigstens eines Lagenparameters aufweisen. Um zu vermeiden, dass die Lage von Fasern während der Bewegung zerfällt, können dem Förderband auch Mittel zugeordnet sein, die temporär die Lage der Fasern zueinander fixieren (wie zum Beispiel magnetische Felder).

Gemäß einer weiteren Ausgestaltung des Verfahrens umfasst Schritt c) zumindest eine der folgenden Handlungen:
c.1) Mindestens einmalige Durchführung eines Widerstandsschweißens;
c.2) Mindestens einmalige Durchführung eines Rollnahtschweißens;
c.3) Schweißen unter Schutzgas;
c.4) Verdichten der Lage;
c.5) Überprüfen der Schweißverbindungen.

Auch wenn grundsätzlich andere Möglichkeiten zur Fixierung der Fasern miteinander bekannt sind (Sintern, mechanisches Verhaken, etc.), wird hier als bevorzugte Fügetechnik das Schweißen vorgeschlagen. Aufgrund der Ausgestaltung des Vlies mit metallischen Fasern wird das Widerstandsschweißen angeführt, da dieses mit relativ hoher Geschwindigkeit fortlaufend durchführt werden kann.

Das Rollnahtschweißen wie auch das Bucknahtschweißverfahren gehört zu den Press-Verbindungsschweißverfahren, insbesondere dem Widerstandspressschweißen. Beim Widerstandsschweißen erfolgt die Erwärmung an der Schweißstelle in Folge Joule'scher Widerstanderwärmung bei Stromfluss und durch einen elektrischen Leiter. Die Stromzufuhr erfolgt über Elektroden mit einer balligen beziehungsweise planen Arbeitsfläche. Zum Rollnahtschweißen werden zwei rollenförmige, walzenartige oder ähnliche (angetriebene) Elektroden eingesetzt. Die zu verschweißenden Fasern in der Lage sind dabei mit Kontakt zueinander überwiegend überlappend angeordnet. Die Lage mit den Fasern wird dann durch die Elektroden hindurchgeführt, wobei diese zumindest teilweise miteinander verpresst werden. Je nach Art des Kontaktes findet ein Stromfluss von einer Elektrode durch die Fasern hin zur gegenüberliegenden Elektrode statt, wobei sich dort Schweißpunkte ausbilden. Um möglichst große Bereiche der Lage mit einer solchen Schweißanlage zu bearbeiten, muss gewährleistet sein, dass über den gesamten Bereich möglichst gleichmäßig viele Schweißverbindungen generiert werden.

Zur Verwirklichung eines solchen schweißtechnischen Verbindens kann es unter Umständen auch erforderlich sein, mehrere Schweißanlagen hintereinander zur Ausbildung der gewünschten Schweißverbindungen einzusetzen. Dabei wird die Lage vorzugsweise kontinuierlich zunächst in einer ersten Schweißanlage und anschließend einer zweiten Schweißanlage zugeführt, wobei diese so aufeinander abgestimmt sind, dass mit der zweiten Durchführung neue Schweißverbindungen generiert werden. Im Hinblick auf die Schritte c.1) und c.2) sei ergänzend noch darauf hingewiesen, dass diese mit weiteren Verfahren zur Ausbildung von fügetechnischen Verbindungen untereinander kombiniert werden können, beispielsweise können die Fasern zuvor verwebt werden oder anschließend noch miteinander gesintert.

Aufgrund der hohen, wenn auch räumlich sehr begrenzten Wärmeeinbringung in die metallische Lage besteht erneut die Gefahr einer Oxidbildung auf den Fasern, so dass es vorteilhaft ist, das Verschweißen der Fasern miteinander unter Schutzgas durchzuführen. Das Schutzgas umfasst bevorzugt wenigstens eine der Komponenten Argon und Helium.

Unmittelbar vor, während und/oder nach dem Schweißen kann die Lage verdichtet werden. Das Verdichten der Lage kann beispielsweise in der Art stattfinden, dass die Lage durch zwei Walzen, zwischen denen ein Spalt vorgesehen ist, hindurchgeführt wird, wobei der Spalt kleiner als die Lagendicke ist. Beim Verdichten der Lage werden bevorzugt die darin gebildeten Hohlräume beziehungsweise Poren verkleinert, wobei auch ein plastisches Verformen der Fasern stattfindet. Auch auf diese Weise ist ein stärkerer Verbund der Fasern miteinander erreichbar. Soll eine Verdichtung während der Schweißprozesse erfolgen, ist das Schweißverfahren bevorzugt als Pressschweißverfahren ausgeführt. Unter Umständen kann die Lage noch nachverdichtet werden, beispielsweise dann, wenn sie unmittelbar einem zweiten Schweißprozess unterzogen wird.

Nach dem Schweißvorgang können die Schweißverbindungen auch überprüft werden. Dabei ist eine optische Analyse der sich bewegenden Faserlage, eine gezielte Verformung der Faserlage oder auch ein Strömungswiderstand der Faserlage erfassbar. Beim Biegen, das beispielsweise durch Umformen um eine Welle erfolgen kann, können die Biegekräfte als Maß für die Qualität der Schweißverbindung herangezogen werden. Es ist auch möglich, dass die geschweißte Lage mit einem sie durchströmenden Luftstrom beaufschlagt wird, wobei aus der Verformung der Lage, der Anzahl der ausgelösten Fasern, etc. Rückschlüsse auf die Schweißverbindungen gezogen werden können. Dabei wird ein geregelter Schweißprozess bevorzugt, der also die Möglichkeit eröffnet, beim Feststellen von ungenügenden Schweißverbindungen den Schweißprozess anzupassen.

Nach einer weiteren Ausgestaltung des erfindungsgemäßen Verfahrens umfasst Schritt d) zumindest eine der folgenden Handlungen:
d.1) Verdichten der Lage;
d.2) Abtrennen mehrerer Vliese von der Lage;
d.3) Klassifizieren der Vliese;
d.4) Wickeln, Winden oder Falten eines Vlieses;
d.5) Strukturieren eines Vlieses;
d.6) Herausstanzen von Regionen eines Vlieses;
d.7) Kombinieren eines Vlieses mit Verschlusselementen;
d.8) Säumen der Lage.

Das "Verdichten" der Lage kann zur Einstellung der gewünschten Vlieseigenschaften (z.B. Dichte, Porosität, Festigkeit, Dicke, etc.) dienen. Mit einem "Vlies" ist insbesondere ein flächiges Gebilde gemeint, das mit vorgegebenen, "endlichen" Abmaßen gebildet ist und in dem die Fasern wirr oder geordnet zueinander angeordnet sind. Beispiele für Vliese sind Gewebe, Gitterstrukturen, Gestricke, Wirrlagen, etc.. Das Vlies ist hier bevorzugt mit Fasern gebildet, die aus einem hochtemperaturfesten und korrosionsbeständigen Material sind, was auch für alle weiteren Zusatzstoffe des Vlieses gelten soll. Die Porosität des hergestellten Vlieses liegt bevorzugt in einem Bereich von 30 % bis 80 %, insbesondere in einem Bereich von 45 % bis 60 %. Das Vlies hat dabei ein bevorzugtes Flächengewicht im Bereich von 250 bis 1500 g/m² [Gramm pro Quadratmeter].

Das Abtrennen mehrerer Vliese (d.2)) von der Lage erfolgt im Wesentlichen in einer Richtung quer zur Transportrichtung der Lage, wobei Stanzwerkzeuge, sich mitbewegende, so genannte "fliegende", Messer oder ähnliche Geräte zum Einsatz gelangen können.

Gerade für den Fall, dass eine Herstellung mit unterschiedlichen Vlieseigenschaften durchgeführt wird, also einer Verfahrensvariante, bei der nur eine bestimmte Anzahl von Vliesen mit einer Faservlieseigenschaft und anschließend mindestens eine weitere Anzahl mit anderen Faservlieseigenschaften produziert wird, ist es vorteilhaft, die Vliese entsprechend zu klassifizieren (d.3)). Danach können die unterschiedlichen Vliese auch weiteren Bearbeitungsstationen separat zugeführt werden. Es ist auch möglich, bei der Klassifikation Ausschuss-Teile zu identifizieren und diese gegebenenfalls zur Wiederverwertung rückzuführen.

Während bislang die Vliese als im Wesentlichen flächige Gebilde gestaltet waren, die sich im Wesentlichen in einer Ebene befinden, kann nun nach Handlung d.4) auch ein Wickeln und/oder Winden und/oder Stapeln und/oder Falten der Vliese vorgenommen werden. Damit ist insbesondere gemeint, dass das Vlies durch plastische Umformung eine Krümmung erhält. Nach dieser plastischen Umformung kann das Vlies beispielsweise S-förmig gebogen, spiralförmig aufgewickelt, sternförmig gefaltet, balg-artig gefaltet, etc. sein. Das Umformen des Vlieses kann dabei auch gemeinsam mit weiteren Elementen des Wabenkörpers (Blechfolien, Stützstrukturen, etc.) gemeinsam stattfinden.

Neben dieser großflächigen Umformung des Vlieses besteht auch die Möglichkeit, das Vlies zu strukturieren (d.5)). Beim Strukturieren wird eine Struktur in das Vlies eingebracht, die nicht wesentlich größer als die Vliesdicke ist. Als Strukturen bieten sich insbesondere Wellstrukturen, Zick-Zack-Strukturen und/oder Rechteck-Strukturen an. Diese Strukturen begrenzen später zumindest teilweise Strömungskanäle eines Wabenkörpers. Zur Herstellung einer solchen Struktur können beispielsweise ineinander greifende Wellwalzen eingesetzt werden, durch die das Vlies hindurch geführt wird.

Gemäß Schritt d.6) können auch Regionen eines Vlieses herausgestanzt werden. Dabei können beispielsweise Öffnungen generiert werden, die zwar deutlich größer als die Poren bzw. Hohlräumen im Inneren des Vlieses sind, ggf. aber eine maximale Erstreckung von 20 mm nicht überschreiten. Solche Öffnungen können beispielsweise zur Einstellung bestimmter Teilströmungen im Inneren des Wabenkörpers, zur Bildung eines Bypass oder zur Erzeugung von Verwirbelungsstellen im Wabenkörper dienen. Darüber hinaus ist jedoch auch möglich, dass eine sehr große Region des Vlieses herausgestanzt wird, wobei diese z.B. scheibenförmigen Vliese (ggf. mit einem Durchmesser größer als 70 mm, insbesondere mindestens 90 mm) dann selbst wiederum als Filtermedium beispielsweise in einem radial durchströmten Wabenkörper eingesetzt werden können. Selbstverständlich sind mehrere Stanzvorgänge beziehungsweise Stanzarten gleichzeitig durchführbar.

Schließlich kann das Vlies auch mit Verschlusselementen kombiniert werden (d.7)). Diese sind bevorzugt nah einer Kante des Vlieses angeordnet und haben beispielsweise hinsichtlich des Wabenkörpers eine Dichtfunktion und/oder dienen zur Anbindung weiterer Vliese und/oder Gehäuseteile. Als Verschlusselement kann beispielsweise eine Schnurr, ein Blechstreifen, ein Element umfassend Sintermaterial, eine Lochmaske, etc. zum Einsatz gelangen.

Nach d.8) wird auch ein Säumen der Lage vorgeschlagen. Damit ist insbesondere gemeint, dass die Kanten der Lage, die in Erstreckungsrichtung der Lage verlaufen, im wesentlichen parallel verlaufen und/oder eine gewünschte Breite der Lage eingehalten wird. Dies kann z.B. mittels Entfernen von Fasern durchgeführt werden, wobei die Lage bevorzugt zurechtgeschnitten wird.

Gemäß einer weiteren Ausgestaltung des Verfahrens umfasst Schritt e) zumindest eine der folgenden Handlungen:
e.1) Kombinieren wenigstens eines Vlieses mit wenigstens einem Element aus der Gruppe: mindestens eine Metallfolie, mindestens ein Gehäuse, mindestens eine Elektrode, mindestens eine Wabenstruktur, mindestens ein perforiertes Rohr;
e.2) Beleimen wenigstens eines Vlieses oder eines damit verbunden Elements
e.3) Beloten wenigstens eines Vlieses oder eines damit verbundenen Elements.

Bei der Metallfolie handelt es sich bevorzugt um eine mit einer Foliendicke kleiner 0,15 mm, insbesondere im Bereich von 0,03 mm bis 0,12 mm. Die Metallfolie umfasst dabei Chrom und Aluminium und basiert auf einem Stahlwerkstoff, der temperatur- und korrosionsbeständig ist. Die Metallfolie weist bevorzugt eine Wellstruktur auf. Das Gehäuse ist bevorzugt ebenfalls metallisch und kann neben runden, ovalen, oder eckigen Querschnitten auch jeden beliebigen anderen Querschnitt aufweisen. Das Gehäuse nimmt in seinem Inneren zumindest teilweise dass Vlies- und/oder die Metallfolie auf. Die Bereitstellung einer Elektrode bietet sich insbesondere dann an, wenn der Wabenkörper elektrisch beheizbar ausgeführt sein soll. Hierzu können dem Wabenkörper auch Isolierschichten zugeordnet sein, die partiell einen definierten Strompfad durch den Wabenkörper bilden. Bei anlegen einer Spannung erfolgt aufgrund der Joul'schen-Widerstandserwärmung ein regelbares Aufheizen des Vlieses und/oder der Metallfolie. Das Beheizen des Wabenkörpers kann beispielsweise während der Kaltstartphase des Abgassystems und/oder zur thermischen Regeneration eines Wabenkörpers als Partikelfalle vorteilhaft sein. Weiter ist beispielsweise auch möglich, dass der Wabenkörper gemeinsam mit einer weitem Wabenstruktur in einem einzelnen Gehäuse positioniert wird. Die Wabenstruktur kann grundsätzlich mit Metallfolien oder (extrodiertem) keramischen Material gebildet sein. Für den Fall, dass ein radial durchströmbarer Wabenkörper hergestellt werden soll, können beispielsweise scheibenförmig ausgestanzte Vliese in definierten Abständen um mindestens ein perforiertes Rohr bzw. in eine perforiertes Rohr angeordnet werden, so dass ein durchströmen des Gasstromes von innen liegenden zu radial außen liegenden Bereichen ermöglicht wird.

Zeitgleich oder versetzt zum Kombinieren des wenigstens einen Vlieses mit mindestens einem Element aus der Gruppe kann das Vlies und/oder ein damit zu verbindendes Element zumindest teilweise beleimt werden. Die Applikation von Leim (Haftmittel, Kleber, etc.) kann mittels Streifenmaterial, selbstklebenden Etiketten, einem Druckverfahren, etc. durchgeführt werden.

Ebenfalls zeitgleich und/oder nach dem Kombinieren gemäß Schritt e.1) kann wenigstens ein Vlies und/oder ein damit verbundenes Element zumindest teilweise belotet werden. Das Lotmaterial kann ebenso als Streifenmaterial, Etikette und/oder im Druckverfahren appliziert werden. Es ist jedoch auch möglich, dass dem Wabenkörper ein pulverförmiges Lot zugeführt wird, welches an den zuvor mit Leim versehenen Teilbereichen haften bleibt. Im Hinblick auf die Techniken zum beleimen und beloten einer Wabenstruktur wird insbesondere auf die bereits bekannten Methoden, insbesondere der Anmelderin, hingewiesen, die zur ergänzenden Veranschaulichung voll herangezogen werden können.

Schließlich wird nun auch ein Wabenkörper mit mindestens einem Vlies hergestellt nach einem Verfahren der vorstehend erfindungsgemäße beschriebenen Art vorgeschlagen, wobei der Wabenkörper mit wechselseitig verschlossenen Kanälen ausgeführt ist und dass mindestens eine Vlies zumindest eine über die Vliesdicke unterschiedlich ausgeführte Vlieseigenschaft aufweist. Grundsätzlich können die Wabenkörper mit vielen Ausprägungen gemäß dem vorstehend beschriebenen Verfahren hergestellt werden, beispielsweise nach Art eines radial durchströmbaren Wabenkörpers, mit sternförmig angeordneten Kanälen, mit ring- bzw. balgartigen Kanälen oder als offene Partikelfalle, bei der keiner der Filterkanäle vollständig verschlossen ist. Gerade aber im Hinblick auf den Einsatz eines Wabenkörpers im Abgassystem mobiler Verbrennungskraftmaschinen (Otto- und Dieselmotoren) mit einer sehr hohen Reinigungswirkung hinsichtlich der im Abgas enthaltenden Partikel wird hier nun ein Wabenkörper vorgeschlagen, der wechselseitig verschlossene Kanäle aufweist. Dazu wird der Wabenkörper an den Stirnseiten mit mindestens einem Verschlusselement ausgeführt, so dass (bevorzugt) alle Kanäle entweder an der einen oder an der gegenüberliegenden Stirnseite verschlossen sind. Damit kann beispielsweise erreicht werden, dass der gesamte Abgasstrom wenigstens einmal durch ein metallisches Vlies hindurchströmen muss.

In diesem Zusammenhang wird nun hier vorgeschlagen, dass eine über die Vliesdicke unterschiedlich ausgeführte Vlieseigenschaft ausgeführt ist, wie beispielsweise die Porosität, die Art der Fasern, die Vorsehung von Zusatzstoffen, etc.. Unter Umständen ist es auch vorteilhaft, diese und/oder eine andere Vlieseigenschaft senkrecht zur Vliesdicke, also beispielsweise in axialer Richtung des Wabenkörpers, zu variieren. Die Kombination aus einem wechselseitig verschlossenen Kanalsystem und der unterschiedlich ausgeführten Vlieseigenschaft hat den Vorteil, dass die Strömung durch die Verschlusselemente in bestimmte Richtungen durch das Vlies exakt vorhersehbar hindurch gelenkt wird. An dieses Strömungsverhalten des Abgases kann nun das Vlies angepasst sein, so dass beispielsweise Partikel unterschiedlicher Größe in unterschiedlichen Bereichen des Vlieses ein- bzw. angelagert werden. Diese gezielte Ein- bzw. Anlagerung von Partikeln kann eine effiziente Umsetzung dieser Schadstoffe, beispielsweise durch eine Bereitstellung eines Katalysators in der Umgebung, begünstigt werden. Bevorzugt wird ein solcher Wabenkörper mit einer Kombination aus mindestens einem Vlies und mindestens einer gewellten Metallfolie gebildet.

Bevorzugt wird der vorstehend beschriebene Wabenkörper zum Filtern eines Abgasstromes verwendet. Als Einsatzgebiet ist insbesondere der Automobilbereich zu nennen, wobei dieser Wabenkörper dabei ggf. Teil eines komplexeren Abgassystems ist, bei dem der Wabenkörper mit mindestens einem katalytischen Konverter, einem Adsorber, einem SCR-Katalysator, einer Partikelfalle, etc. kombiniert wird.

Die Erfindung, sowie das technische Umfeld werden nachfolgend anhand der Figuren näher beschrieben. Die Figuren zeigen dabei auch besonders bevorzugte Ausgestaltungen der Erfindung, auf die die Erfindung jedoch nicht begrenzt ist. Es ist darauf hinzuweisen, dass die Darstellungen in den Figuren schematischer Natur sind und regelmäßig nicht zur Veranschaulichung von Größenverhältnissen geeignet sind. Es zeigen:
- Fig. 1:: schematisch eine Ausführungsvariante eines Verfahrens zur Herstellung eines Wabenkörpers mit mindestens einem Vlies aufweisend metalli- sche Fasern;
- Fig. 2:: einen wechselseitig verschlossenen Wabenkörper;
- Fig. 3:: einen radial durchströmbaren Wabenkörper;
- Fig. 4:: eine elektrisch beheizbare Abgasbehandlungseinheit mit einem Waben- körper,
- Fig. 5:: ein Vlies aufweisend metallische Fasern, und

- Fig. 6:: schematisch eine weitere Ausführungsvariante eines Verfahrens zur Herstellung eines Wabenkörpers.

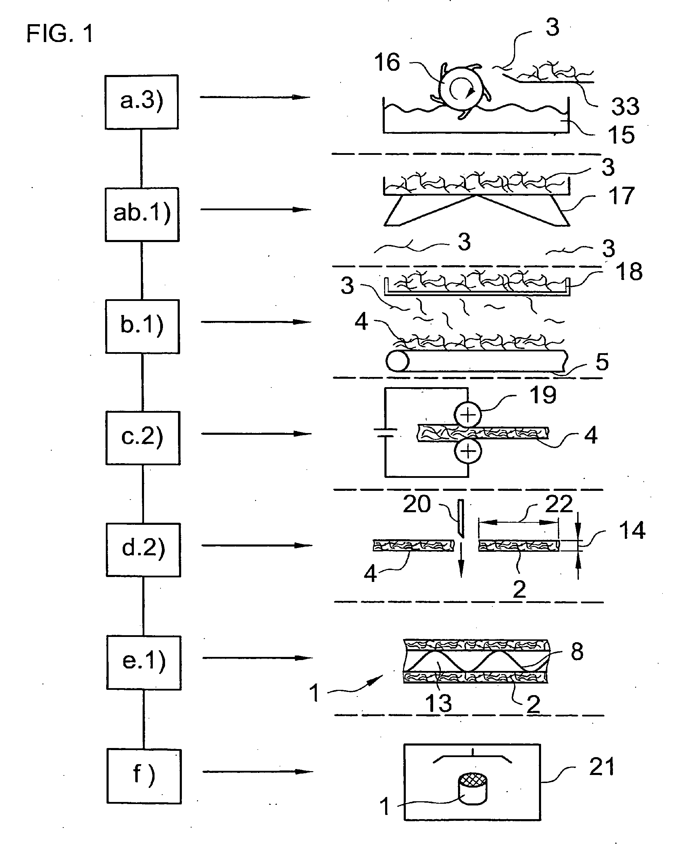

Fig. 1 veranschaulicht eine Ausführungsvariante des Herstellungsverfahrens eines Wabenkörpers, wobei die Figur links schematisch die in den Kurzbezeichnungen der hier genannten Verfahrensschritte bezeichnet und rechts exemplarisch eine Ausgestaltung dieses Verfahrensschrittes dargestellt ist.

Demnach wird gemäß Schritt a.3) zunächst zu Herstellung von metallischen Fasern 3 eine diskontinuierliche Entnahme aus einer Metallschmelze 15 vorgenommen. Dabei generiert ein sich in der Metallschmelze 15 drehendes Laufrad 16 Fasern 3, die zum Aushärten einer Ablage 33 zugeführt werden.

Die so hergestellten Fasern 3 werden nun gemäß Schritt ab.1) klassifiziert. Hierfür werden die Fasern 3 einem Sortierer 17 zugeführt, der beispielsweise in Abhängigkeit der Form bzw. Größe der Fasern 3 gleichzeitig auch eine Selektion bzw. Trennung der unterschiedlichen Fasern 3 vornimmt.

Diese Fasern werden nun einem Verteiler 18 zugeführt, der die Fasern gleichmäßig auf einer Unterlage 5 zu einer Lage 4 schichtet (vgl. Schritt b.1)). Die Unterlage 5 ist hier als Förderband ausgeführt, so dass die generierte Lage 4 anschließend einem Schweißprozess zugeführt werden kann.

Nach Schritt c.2) wird die Lage 4 durch eine Schweißanlage 19 geführt, die zur mindestens einmaligen Durchführung eines Rollnahtschweißens geeignet ist.

Daran anschließend wird die Lage 4 entsprechend Schritten d.2) in separate Vliese 2 einer vorgegebenen Vliesdicke 14 und Vlieslänge 22 umgewandelt, wobei dies durch Abtrennen der Vliese 2 mittels einer Trennvorrichtung 20 erfolgt.

Die so erzeugten Vliese 2 werden nun mit einer Mehrzahl von gewellten Metallfolien 8 kombiniert, so dass ein Wabenkörper 1 mit einer Vielzahl von Kanälen 13 gebildet ist (Schritt e.1)).

Zur Ausbildung von fügetechnischen Verbindungen zwischen den einzelnen Elementen des Wabenkörpers und/oder zur Weiterbildung der fügetechnischen Verbindungen der Fasern zueinander, wird der Wabenkörper 1 dann noch einem Hartlöt-Prozess unterzogen (Schritt f)), wobei der Wabenkörper 1 zumindest zeitweise und bevorzugt im Durchlauf einem Ofen 21 zugeführt wird, in dem bevorzugt ein Vakuum und Temperaturen oberhalb von 1.000°C herrschen. Der so hergestellte Wabenkörper 1 ist insbesondere zur Verwendung im Abgassystem von Automobilen geeignet.

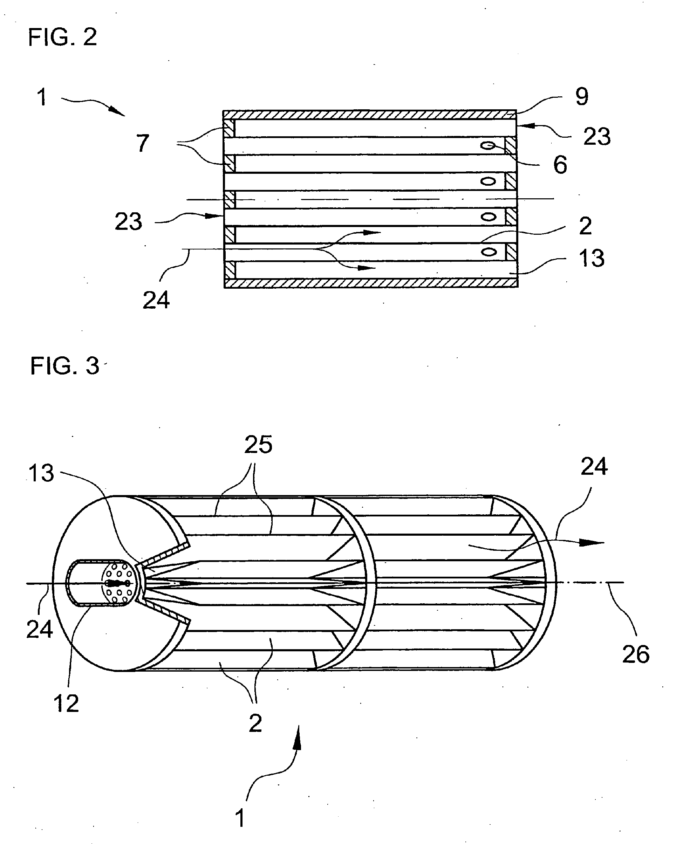

Fig. 2 zeigt nun eine mögliche Ausführungsvariante eines Wabenkörpers 1, hergestellt mit dem erfindungsgemäßen Verfahren. Der Wabenkörper 1 weist wiederum eine Vielzahl von Kanälen 13 auf, die hier mittels jeweils an einer Stirnseite 23 befestigten Verschlusselementen 7 wechselseitig verschlossen sind. So wird das Abgas gezwungen, zunächst in Strömungsrichtung 24 in einen offenen Kanal 13 einzutreten, das dann aber aufgrund des Verschlusselements 7 durch das Vlies 2 hindurchströmt und in einen anderen, benachbarten Kanal 13 übertritt. Beim Durchtreten des Vlieses 2 werden insbesondere Partikel (wie Ruß und Asche) zurückgehalten. Um zu verhindern, dass Kanäle 13 in Folge zu großflächiger Rußeinlagerungen nicht mehr genutzt werden können, sind im Vlies 2 Regionen 6 herausgestanzt, so dass eine Art "Bypass" gebildet ist. Der Wabenkörper 1 ist von einem metallischen Gehäuse 9 umgeben.

Fig. 3 veranschaulicht eine weitere Ausgestaltung eines Wabenkörpers 1, wie er mit dem Verfahren hergestellt werden kann. Dieser Wabenkörper 1 hat einen sternförmigen Aufbau und wird radial von innen nach außen durchströmt. Dazu tritt das Abgas durch ein Rohr 12, welches im Bereich des Wabenkörpers 1 mit einer Perforierung versehen ist. Dadurch gelangt das Abgas in die mit dem Vlies 2 gebildeten Taschen 25, die die Kanäle 13 bilden. Durch diese Taschen 25 tritt das Abgas im Wesentlichen radial zur Achse 26 aus und wird außen erneut in im Wesentlichen axialer Richtung abgeführt.

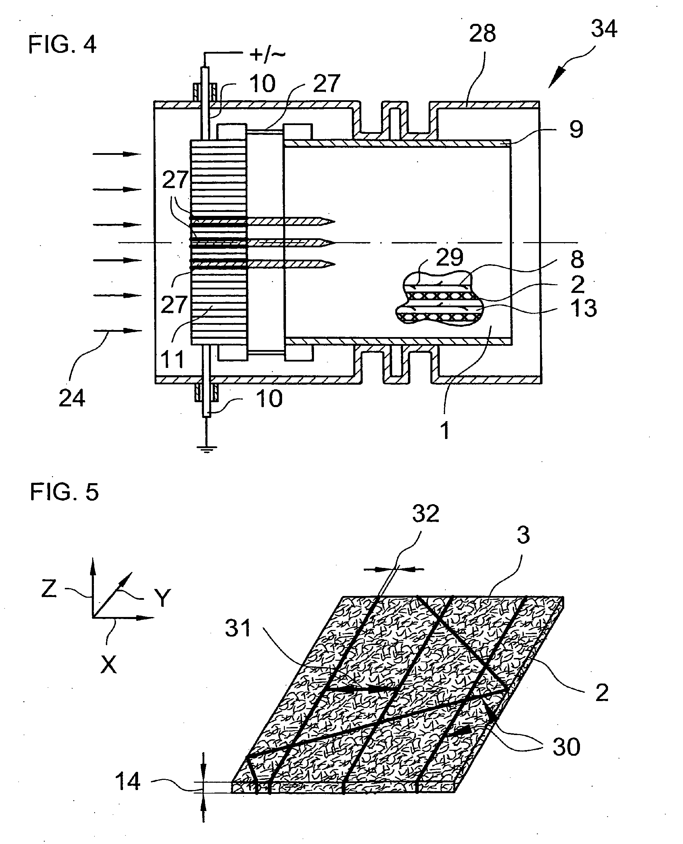

Fig. 4 veranschaulicht nun eine Abgasbehandlungseinheit 34, die als elektrisch beheizbarer Wabenkörper 1 ausgeführt ist. Der Wabenkörper 1 selbst ist wiederum mit einer Kombination aus metallischen Vlies 2 und Metallfolien 8 so gebildet, dass (offene) Kanäle 13 gebildet sind, die im Wesentlichen parallel zueinander verlaufen. Auch wenn die Kanäle 13 größtenteils nicht vollständig verschlossen sind, so weisen die Metallfolien 8 jedoch Strömungsbeeinflusser 29 auf, die zumindest teilweise in die Kanäle 13 hineinragen und eine Ablenkung von Teilen der Abgasströmen durch das Vlies 2 bewirken. Dieser Wabenkörper 1 ist in einem Gehäuse 9 angeordnet.

Stirnseitig zu dem Wabenkörper 1 ist eine weitere Wabenstruktur 11 vorgesehen, die beispielsweise als Oxidationskatalysator ausgeführt sein kann. Die Wabenstruktur 11 wird mittels (zumindest teilweise elektrisch isolierten) Stiften 27 dem Wabenkörper 1 verbunden. Die Kontaktierung der Wabenstruktur 11 für einen elektrischen Stromfluss erfolgt mittels der schematisch dargestellten Elektroden 10. Damit ist möglich, dass das in Strömungsrichtung 24 zunächst auf die Wabenstruktur 11 treffende Abgas aufgeheizt wird und dabei beispielsweise auch eine thermische Regeneration der nachgeschalteten, den Wabenkörper 1 umfassenden Partikelfalle erlaubt. Die gesamte Anordnung des Wabenkörpers 1 mit der Kombination der Wabenstruktur 11 ist in der Abgasleitung 28, beispielsweise eines Kraftfahrzeugs, integriert.

Fig. 5 veranschaulicht nun im Detail eine Ausgestaltung des Vlieses 2, das eine Vielzahl von metallischen Fasern 3 umfasst. Die Fasern 3 sind als Wirrlage angeordnet und in separaten Verbindungszonen 30 miteinander verbunden. Die Verbindungszonen 30 sind mit einem Abstand 31 und einer Breite 32 ausgeführt, die im Wesentlichen durch die Ausgestaltung beispielsweise des Rollnahtschweißens charakterisiert sind. Dabei ist hier anzumerken, dass unter Umständen die Breite 32 auch größer ausgeführt sein kann, als der Abstand 31. Der Fig. 5 kann entnommen werden, dass das Vlies 2 ein im Wesentlichen flächiges Gebilde ist, wobei die kleinste Abmessung regelmäßig die Vliesdicke 14 ist. Die Ausbildung der Verbindungszonen 30 kann auch zur Realisierung einer anisotropen Ausprägung mindestens einer Faservlieseigenschaft dienen. Neben den hier dargestellten Verbindungszonen 30 können weitere fügetechnische Verbindungen zwischen den Fasern 3 generiert sein, beispielsweise Sinterverbindungen, die im Rahmen des Verfahrensschrittes f) erzeugt werden.

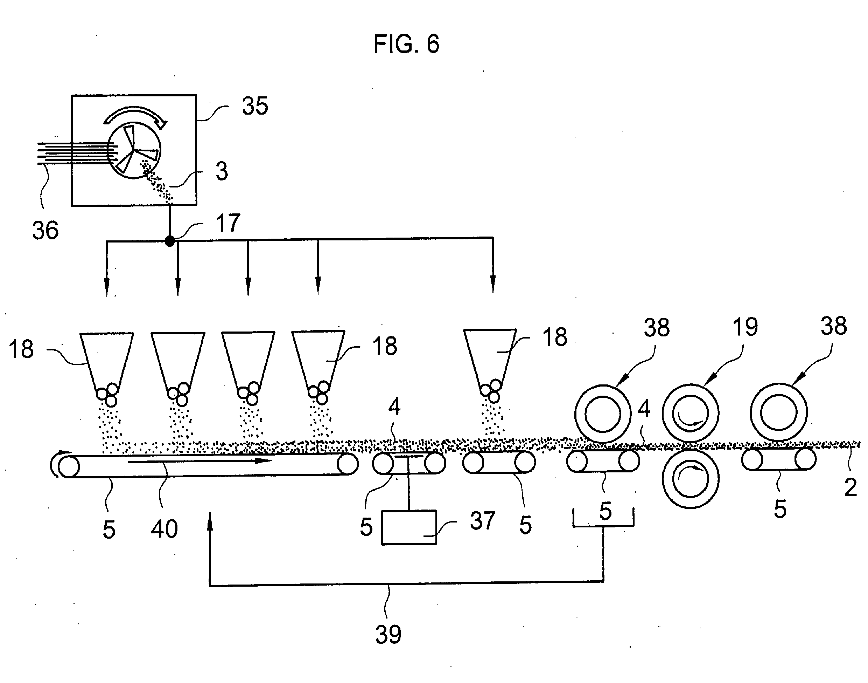

Fig. 6 veranschaulicht schematisch eine weitere Ausführungsvariante des Verfahrens zur Herstellung eines Wabenkörpers 1 bis zur Erzeugung der Vliese 2. Zur Fertigstellung des Wabenkörpers 1 kann auf vorstehend beschriebene Fügemethoden zurückgegriffen werden. Die Faserherstellung erfolgt hierbei mit einer Schneidanlage 35, der eine Mehrzahl von metallischen Drähten 36 zugeführt wird. Die Scheidanlage 35 weist einen Schneidmechanismus auf, der die langen Drähte 36 kontrolliert in kurze Fasern 3 schneidet. Die so hergestellten Fasern 2 werden in einem Sortierer 17 klassifiziert und selektiert, bevor sie anschließend unterschiedlichen Verteilen 18 zugeführt werden. Das Erzeugen einer Lage 4 erfolgt in zwei Stationen, wobei innerhalb einer ersten, links dargestellten, Station vier Verteilter 18 über einer als Förderband gestalteten Unterlage 5 angeordnet sind, die damit erzeugte Lage 4 dann mittels einer Waage 37 hinsichtlich ihrer Vlieseigenschaft überwacht, und ggf. in einer zweiten Station umfassend einen weiteren Verteiler 18 mit der festgestellten, noch erforderlichen Menge an Fasern 3 gezielt aufgefüllt wird.

Nachdem nun das gewünschte Flächengewicht der Lage 4 vorliegt, wird diese in Transportrichtung 40 einer ersten Umformanlage 38 zugeführt. Dort wird eine Verdichtung der Lage 4 und ein Vorschneiden der Kanten der Lage 4 vorgenommen. Das beim Vorschneiden abgetrennte Fasermaterial, das bevorzugt weniger als 10 % des eingesetzten Fasermaterials beträgt, wird zur ersten Station bzw. wenigstens einem der Verteiler 18 oder dem Sortierer 17 rückgeführt. Die vorbehandelte Lage 4 durchläuft dann eine Schweißanlage 19, die zur Durchführung des Rollnahtschweißens mit einer Schweißgeschwindigkeit von mindestens 4 m/min bei einer Lagenbreite im Bereich von über 100 mm geeignet ist. Nachdem die Fasern 3 nun miteinander unverlierbar gefügt wurden, durchläuft die Lage schließlich eine weitere Umformanlage 38, bei der eine nochmalige Verdichtung vorgenommen wird und separate Vliese 2 mit vorgegebenen Abmessungen abgetrennt werden. Diese Vliese 2 können nun weiteren Bearbeitungsstationen zur Bildung eines Wabenkörpers 1 zugeführt werden. Die hier veranschaulichte Methode zur Herstellung der Vliese 2 ist insbesondere für die Serienfertigung geeignet, da hohe Transport- und Schweißgeschwindigkeiten realisierbar sind und gleichzeitig eine geregelte Faserzugabe zur Erzeugung gewünschter Vlieseigenschaften möglich ist.

Die vorgeschlagenen Verfahren eignen sich insbesondere für die serienmäßige Herstellung von Partikelfallen für Abgassysteme von Automobilen.

### Bezugszeichenliste

- 1: Wabenkörper
- 2: Vlies
- 3: Faser
- 4: Lage
- 5: Unterlage
- 6: Region
- 7: Verschlusselement
- 8: Metallfolie
- 9: Gehäuse
- 10: Elektrode
- 11: Wabenstruktur
- 12: Rohr
- 13: Kanal
- 14: Vliesdicke
- 15: Metallschmelze
- 16: Laufrad
- 17: Sortierer
- 18: Verteiler
- 19: Schweißanlage
- 20: Trennvorrichtung
- 21: Ofen
- 22: Vlieslänge
- 23: Stirnseite
- 24: Strömungsrichtung
- 25: Tasche
- 26: Achse
- 27: Stift
- 28: Abgasleitung

- 29: Strömungsbeeinflusser
- 30: Verbindungszone
- 31: Abstand
- 32: Breite
- 33: Ablage
- 34: Abgasbehandlungseinheit
- 35: Schneidanlage
- 36: Draht
- 37: Waage
- 38: Umformanlage
- 39: Faserrückführung
- 40: Transportrichtung

## Patentansprüche

1. Verfahren zur Herstellung eines Wabenköpers (1) mit mindestens einem Vlies (2) aufweisend metallische Fasern (3), welches zumindest folgende Schritte umfasst:
a) Herstellen von metallischen Fasern (3);
b) Bilden einer Lage (4) mit metallischen Fasern (3);
c) Verschweißen der metallischen Fasern (3) miteinander;
d) Umformen der Lage (4) zu einem Vlies (2) mit bestimmten Vlieseigenschaften;
e) Erzeugen eines Wabenköpers (1);
f) Hartlöten des Wabenkörpers (1);
wobei Schritt a) wenigstens eine der folgenden Herstellungsmethoden umfasst:
a.1) Abtrennen von einem Metallblock;
a.2) kontinuierliche Fasererzeugung aus einer Metallschmelze (15);
a.3) diskontinuierliche Entnahme aus einer Metallschmelze (15).

2. Verfahren nach Anspruch 1, bei dem während Schritt a) zumindest zeitweise Maßnahmen zur Vermeidung einer Oxidschicht bei den Fasern (3) getroffen werden.

3. Verfahren nach nach Anspruch 1 oder 2, bei dem zwischen Schritt a) und Schritt b) zumindest noch der Schritt ab) Faservorbereitung durchgeführt wird, der zumindest eine der folgenden Handlungen umfasst:
ab.1) Klassifizieren der Fasern (3);
ab.2) Selektieren der Fasern (3);
ab.3) Rückführen der Fasern (3) zur Wiederverwertung;
ab.4) Schneiden der Fasern (3);
ab.5) Mischen der Fasern (3)
ab.6) Reinigen der Fasern (3).

4. Verfahren nach einem der vorhergehenden Ansprüche, bei dem Schritt b) zumindest eine der folgenden Handlungen umfasst:
b.1) Verteilen von Fasern (3) auf einer Unterlage (5);
b.2) Zugeben mindestens eines Zusatzstoffes;
b.3) Bestimmen wenigstens eines Lagenparameters;
b.4) Verändern des wenigstens einen Lagenparameters;
b.5) kontinuierliches Bewegen der Lage (4).

5. Verfahren nach einem der vorhergehenden Ansprüche, bei dem Schritt c) zumindest eine der folgenden Handlungen umfasst:
c.1) mindestens einmalige Durchführung eines Widerstandsschweißen;
c.2) mindestens einmalige Durchführung eines Rollnahtschweißen;
c.3) Schweißen unter Schutzgas;
c.4) Verdichten der Lage (4);
c.5) Überprüfen der Schweißverbindungen.

6. Verfahren nach einem der vorhergehenden Ansprüche, bei dem Schritt d) zumindest eine der folgenden Handlungen umfasst:
d.1) Verdichten der Lage (4);
d.2) Abtrennen mehrerer Vliese (2) von der Lage (4);
d.3) Klassifizieren der Vliese (2);
d.4) Wickeln, Winden oder Falten eines Vlieses (1);
d.5) Strukturieren eines Vlieses (2);
d.6) Herausstanzen von Regionen (6) eines Vlieses (2);
d.7) Kombinieren eines Vlieses (2) mit mindestens einem Verschlusselementen (7);
d.8) Säumen der Lage (4).

7. Verfahren nach einem der vorhergehenden Ansprüche, bei dem Schritt e) zumindest eine der folgenden Handlungen umfasst:
e.1) Kombinieren wenigstens eines Vlieses (2) mit mindestens einem Element aus der Gruppe: mindestens eine Metallfolie (8), mindestens ein Gehäuse (9), mindestens eine Elektrode (10), mindestens eine Wabenstruktur (11), mindestens ein perforiertes Rohr (12);
e.2) Beleimen wenigstens eines Vlieses (2) oder eines damit verbundenen Elements;
e.3) Beloten wenigstens eines Vlieses (2) oder eines damit verbundenen Elements.

## Claims

1. A process for producing a honeycomb body (1) with at least one fleece (2) having metallic fibers (3), which comprises at least the following steps:
a) producing metallic fibers (3);
b) forming a layer (4) comprising metallic fibers (3);
c) welding the metallic fibers (3) to one another;
d) deforming the layer (4) to form a fleece (2) having defined fleece properties;
e) producing a honeycomb body (1);
f) brazing the honeycomb body (1);
in which step a) comprises at least one of the following production methods:
a.1) separating from a metal block;
a.2) continuous fiber production from a metal melt (15);
a.3) discontinuous removal from a metal melt (15).

2. The process as claimed in claim 1, in which during step a) at least from time to time measures are taken to avoid an oxide layer on the fibers (3).

3. The process as claimed in claim 1 or 2, in which between step a) and step b) at least the step ab) of fiber preparation is also carried out, comprising at least one of the following operations:
ab.1) classifying the fibers (3);
ab.2) selecting the fibers (3);
ab.3) returning the fibers (3) for reuse;
ab.4) cutting the fibers (3);
ab.5) mixing the fibers (3);
ab.6) cleaning the fibers (3).

4. The process as claimed in one of the preceding claims, in which step b) comprises at least one of the following operations:
b.1) distributing fibers (3) on a base (5);
b.2) adding at least one additive;
b.3) determining at least one layer parameter;
b.4) altering the at least one layer parameter;
b.5) continuously moving the layer (4).

5. The process as claimed in one of the preceding claims, in which step c) comprises at least one of the following operations:
c.1) carrying out resistance welding at least once;
c.2) carrying out roller seam welding at least once;
c.3) welding under shielding gas;
c.4) compacting the layer (4);
c.5) inspecting the welded joins.

6. The process as claimed in one of the preceding claims, in which step d) comprises at least one of the following operations:
d.1) compacting the layer (4);
d.2) separating a plurality of fleeces (2) from the layer (4);
d.3) classifying the fleeces (2);
d.4) winding, twisting or folding a fleece (1);
d.5) structuring a fleece (2);
d.6) stamping out regions (6) of a fleece (2);
d.7) combining a fleece (2) with at least one closure element (7);
d.8) seaming the layer (4).

7. The process as claimed in one of the preceding claims, in which step e) comprises at least one of the following operations:
e.1) combining at least one fleece (2) with at least one element selected from the group consisting of: at least one metal foil (8), at least one housing (9), at least one electrode (10), at least one honeycomb structure (11), at least one perforated tube (12);
e.2) applying glue to at least one fleece (2) or an element connected to it;
e.3) applying brazing solder to at least one fleece (2) or an element connected to it.

## Revendications

1. Procédé destiné à la fabrication d'un corps en nids d'abeilles (1) avec au moins un non-tissé (2), comprenant des fibres métalliques (3), lequel procédé comprend au moins les étapes suivantes :
a) Fabrication de fibres métalliques (3);
b) formation d'une couche (4) avec des fibres métalliques (3) ;
c) soudage des fibres métalliques (3) entre elles ;
d) déformation de la couche (4) en un non-tissé (2) avec de certaines caractéristiques d'un non-tissé ;
e) génération d'un corps en nids d'abeilles (1) ;
f) brasage fort du corps en nids d'abeilles ;
dans quel cas l'étape a) comprend au moins une des méthodes de production suivantes :
a.1) Détachement d'un bloc en métal ;
a.2) génération continue de fibres à partir d'un bain de fusion (15) ;
a.3) prélèvement discontinu hors d'un bain de fusion (15).

2. Procédé selon la revendication 1, dans le cas duquel durant l'étape a) des mesures sont prises de temps en temps pour éviter une couche d'oxyde sur les fibres (3).

3. Procédé selon la revendication 1 ou 2, dans le cas duquel entre l'étape a) et l'étape b) on effectue au moins encore l'étape ab), préparation des fibres, qui comprend au moins une des actions suivantes :
ab.1) Classification des fibres (3) ;
ab.2) sélection des fibres (3) ;
ab.3) ramener les fibres (3) pour les recycler ;
ab.4) coupe des fibres (3) ;
ab.5) mélange des fibres (3),
ab.6) nettoyage des fibres (3)

4. Procédé selon l'une des revendications précédentes, dans le cas duquel l'étape b) comprend au moins une des actions suivantes :
b.1) répartir des fibres (3) sur un support (5) ;
b.2) ajouter au moins un produit d'addition ;
b.3) déterminer au moins un paramètre de couches ;
b.4) changer l'au moins un paramètre de couches ;
b.5) déplacer continuellement la couche (4).

5. Procédé selon l'une des revendications précédentes, dans le cas duquel l'étape c) comprend au moins une des actions suivantes :
c.1) au moins la mise en oeuvre unique d'un soudage par résistance ;
c.2) au moins la mise en oeuvre unique d'un soudage à la molette ;
c.3) le soudage sous gaz protecteur ;
c.4) la compression de la couche (4) ;
c.5) vérifier les joints soudés.

6. Procédé selon l'une des revendications précédentes, dans le cas duquel l'étape d) comprend au moins une des actions suivantes :
d.1) Compression de la couche (4) ;
d.2) détacher plusieurs non-tissés (2) de la couche (4) ;
d.3) classifier les non-tissés ;
d.4) enrouler, tordre ou plier un non-tissé (2)
d.5) structurer un non-tissé (2) ;
d.6) poinçonner des régions (6) d'un non-tissé (2) ;
d.7) Combiner un non-tissé avec au moins un élément de fermeture (7) ;
d.8) ourler la couche (4).

7. Procédé selon l'une des revendications précédentes, dans le cas duquel l'étape e) comprend au moins une des étapes suivantes :
e.1) combiner au moins un non-tissé (2) avec au moins un élément du groupe : au moins une feuille métallique (8), au moins un boîtier (9), au moins une électrode (10), au moins une structure en nids d'abeilles (11), au moins un tube perforé (12) ;
e.2) enduire de colle au moins un non-tissé (2) ou un élément y étant lié ;
e.3) garnir de brasure au moins un non-tissé (2) ou un élément y étant lié.
